# EUROPEAN PATENT APPLICATION

(11) **EP 4 765 434 A1**
(43) Date of publication of application: **24.06.2026**
(21) Application number: 25820446.0
(22) Date of filing: 06.02.2025
(51) Int. Cl.: H01M 50/502, H01M 50/509, H01M 50/507, H01M 50/516, H01M 50/517

(54) **BATTERY PACK AND VEHICLE INCLUDING SAME**

(30) Priority: 04.06.2024 KR 20240073286
(71) Applicant: LG Energy Solution, Ltd., Seoul 07335 (KR)
(72) Inventor: JUNG, In-Hyuk, Daejeon 34122 (KR); AHN, Jun-Young, Daejeon 34122 (KR); LEE, Yong-Ho, Daejeon 34122 (KR); JO, Yong-Hyuck, Daejeon 34122 (KR); YANG, Jin-Oh, Daejeon 34122 (KR)
(74) Representative: Plasseraud IP
(86) International application number: PCT/KR2025/099312
(87) International publication number: WO 2025/254502

(57) **Abstract**

A battery pack according to the present disclosure includes a plurality of battery cells; a bus-bar assembly disposed on one side of the plurality of battery cells and including a sub-bus-bar unit connected to electrodes of the plurality of battery cells; and a metal member configured to support the plurality of battery cells at a bottom of the bus-bar assembly, wherein the sub-bus-bar unit includes a one-way connection bus-bar connected to the electrodes of the battery cells on one side of the sub-bus-bar unit in a width direction, and wherein the metal member is partially connected to the one-way connection bus-bar at a predetermined position to have a predetermined conductive area so as to avoid current differences in the one-way connection bus-bar.

## Description

### TECHNICAL FIELD

The present disclosure relates to a battery pack and a vehicle including the same and, more specifically, to a battery pack capable of improving the lifespan by enhancing current differences and a vehicle including the same.

This application is based on and claims priority from Korean Patent Application No. 10-2024-0073286, filed on June 04, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Recent medium and large battery packs applied to electric vehicles or the like are configured to include a large number of battery cells with higher cell capacities in order to increase output and/or capacity, and these battery cells are electrically connected using bus-bars.

Such medium and large battery packs more require the stability of the electrical connection structure of the bus-bars. If a large-sized bus-bar is applied to secure the stability of the electrical connection structure, the space occupied by the large-sized bus-bar increases the size of the entire battery pack, which hinders the slimming of the battery pack and also reduces the energy density of the battery pack.

Therefore, a method to maximize energy density while securing the stability of the electrical connection structure is required for the large-capacity battery packs such as medium and large battery packs.

In addition, a considerable amount of current may flow through the bus-bars of the medium and large battery packs, and the current may significantly vary depending on the positions of the bus-bars. Such a current difference result in concentration of the current on a specific battery cell, thereby reducing the long-term life of the battery pack.

Therefore, it is also required for the large-capacity battery packs, such as medium and large battery packs, to find a way to improve the current differences.

### DISCLOSURE

### Technical Problem

The present disclosure is designed to solve the problems of the related art, and therefore the present disclosure is directed to providing a battery pack capable of improving current differences and thus improving the lifespan, and a vehicle including the same.

In addition, the present disclosure is to provide a battery pack capable of preventing current from being concentrated on a specific battery cell, and a vehicle including the same.

In addition, the present disclosure is to provide a battery pack that is advantageous for common use, and a vehicle including the same.

In addition, the present disclosure is to provide a battery pack that is easy to assemble, and a vehicle including the same.

In addition, the present disclosure is to provide a battery pack in which one-way connection bus-bars and metal members can be tightly and firmly connected to each other, and a vehicle including the same.

In addition, the present disclosure is to provide a battery pack with improved electric stability and rigidity, and a vehicle including the same.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a bus-bar assembly disposed on one side of the plurality of battery cells and including a sub-bus-bar unit connected to electrodes of the plurality of battery cells; and a metal member configured to support the plurality of battery cells at a bottom of the bus-bar assembly, wherein the sub-bus-bar unit may include a one-way connection bus-bar connected to the electrodes of the battery cells on one side of the sub-bus-bar unit in a width direction, and wherein the metal member may be partially connected to the one-way connection bus-bar at a predetermined position to have a predetermined conductive area so as to avoid current differences in the one-way connection bus-bar.

The metal member may be connected to the one-way connection bus-bar such that a conductive area at a position closer to a serial connection portion of the one-way connection bus-bar is configured to be smaller than a conductive area at a position farther from the serial connection portion.

The one-way connection bus-bar may include: a first one-way connection bus-bar connected to a negative electrode of the battery cell; and a second one-way connection bus-bar connected to a positive electrode of the battery cell, and the serial connection portion may be formed between the first one-way connection bus-bar and the second one-way connection bus-bar.

The one-way connection bus-bar may include: a first one-way connection portion connected to a negative electrode of the battery cell; and a second one-way connection portion connected to a positive electrode of the battery cell and formed integrally with the first one-way connection portion, and the serial connection portion may be formed at a position where the first one-way connection portion and the second one-way connection portion meet each other.

The one-way connection bus-bar may include: a bus-bar body extending in one direction; and a plurality of electrode connection portions extending from the bus-bar body to the electrodes of the battery cells, and the metal member may be connected to the one-way connection bus-bar by welding or conductive bonding in at least some of a plurality of coupling portions where the bus-bar body and the electrode connection portion are connected.

The metal member and the one-way connection bus-bar may be connected to each other in some of the plurality of coupling portions and may not be connected to each other in the remaining coupling portions thereof.

The metal member and the one-way connection bus-bar may be bonded and connected to each other in every coupling portion, and a bonding area between the metal member and the one-way connection bus-bar may be configured to differ between the plurality of coupling portions.

The one-way connection bus-bar may include: a bus-bar body extending in one direction; and a plurality of electrode connection portions extending from the bus-bar body to the electrodes of the battery cells, and the metal member may be connected to the one-way connection bus-bar by bolting in at least some of a plurality of coupling portions where the bus-bar body and the electrode connection portion are connected.

The metal member and the one-way connection bus-bar may be connected to each other in some of the plurality of coupling portions and may not be connected to each other in the remaining coupling portions thereof.

The metal member and the one-way connection bus-bar may be connected by bolting in every coupling portion, and bolting strength thereof may be configured to differ between the plurality of coupling portions.

In another aspect of the present disclosure, there is provided a vehicle including at least one battery pack according to the present disclosure.

### Advantageous Effects

According to the present disclosure, it is possible to provide a battery pack capable of improving current differences and thus improving the lifespan, and a vehicle including the same.

In addition, it is possible to provide a battery pack capable of preventing current from being concentrated on a specific battery cell, and a vehicle including the same.

In addition, it is possible to provide a battery pack that is advantageous for common use, and a vehicle including the same.

In addition, it is possible to provide a battery pack that is easy to assemble, and a vehicle including the same.

In addition, it is possible to provide a battery pack in which one-way connection bus-bars and metal members can be tightly and firmly connected to each other in welding and conductive bonding, and a vehicle including the same.

In addition, it is possible to provide a battery pack in which one-way connection bus-bars and metal members can be tightly and firmly connected to each other in bolting, and a vehicle including the same.

In addition, it is possible to provide a battery pack with improved electrical stability and rigidity by metal members, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view illustrating a battery pack according to an embodiment of the present disclosure.
FIG. 2 is a plan view illustrating the internal configuration of a battery pack according to an embodiment of the present disclosure.
FIG. 3 is an enlarged plan view of area A in FIG. 2.
FIG. 4 is a perspective view illustrating a metal member of a battery pack according to an embodiment of the present disclosure.
FIG. 5 is an exploded perspective view of a bus-bar assembly of a battery pack according to an embodiment of the present disclosure.
FIG. 6 is a perspective view illustrating a one-way connection bus-bar and a metal member connected to each other in a battery pack according to an embodiment of the present disclosure.
FIG. 7 is a perspective view illustrating a one-way connection bus-bar and a metal member connected to each other in a battery pack according to a modification of an embodiment of the present disclosure.
FIG. 8 is an enlarged plan view of area A in FIG. 2 indicating a coupling portion.
FIG. 9 is a partially enlarged plan view of a battery pack according to another embodiment of the present disclosure.
FIG. 10 is a partially enlarged plan view of a battery pack according to a modification of another embodiment of the present disclosure.
FIG. 11 is a partially enlarged plan view of a battery pack according to another embodiment of the present disclosure.
FIG. 12 is a partially enlarged plan view of a battery pack according to a modification of another embodiment of the present disclosure.
FIG. 13 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

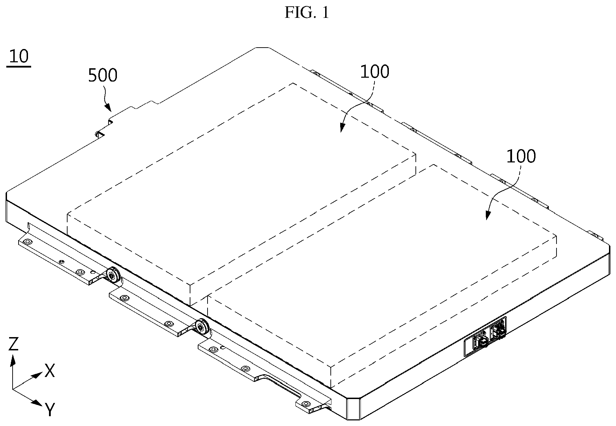

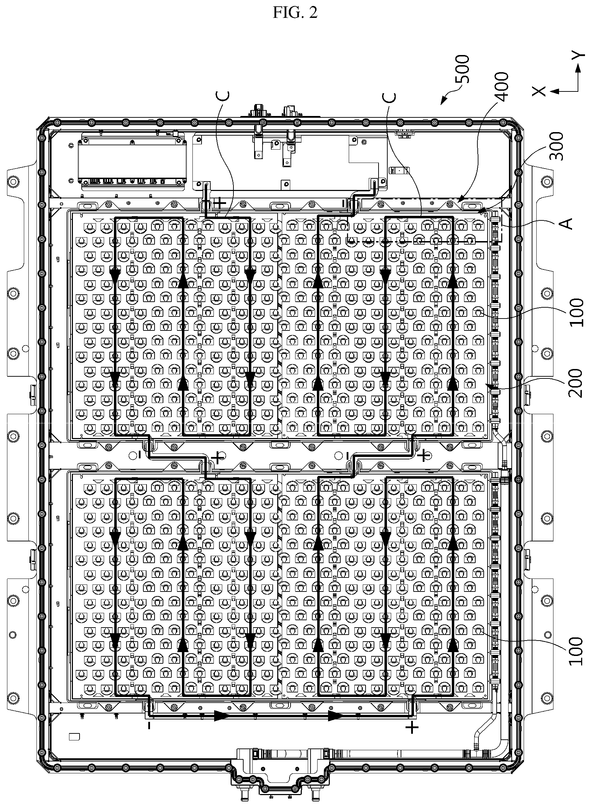

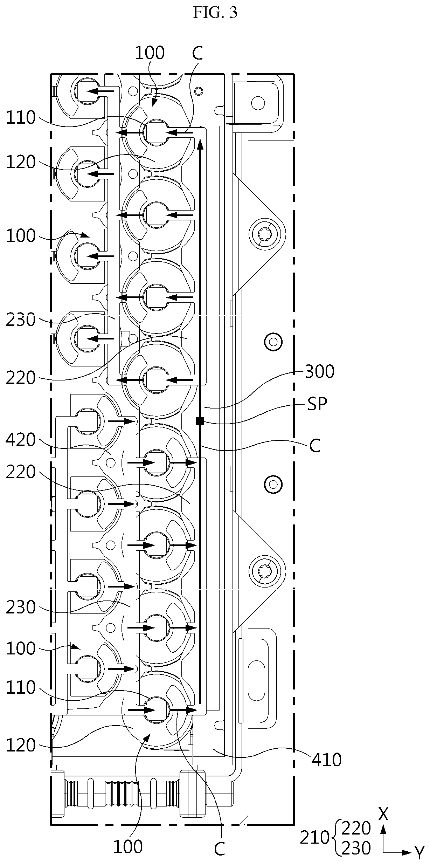

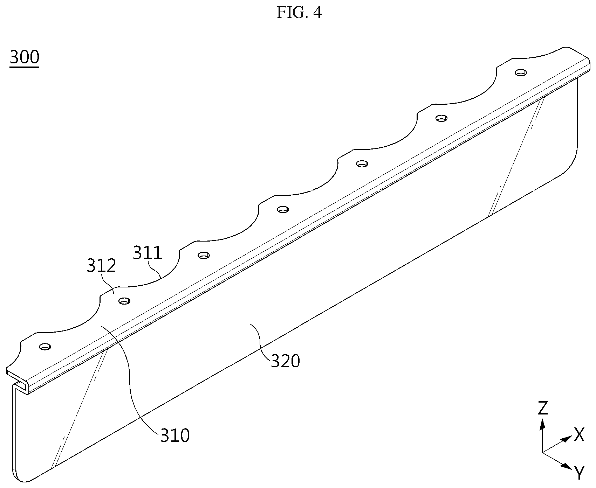

FIG. 1 is a perspective view illustrating a battery pack according to an embodiment of the present disclosure, FIG. 2 is a plan view illustrating the internal configuration of a battery pack according to an embodiment of the present disclosure, FIG. 3 is an enlarged plan view of area A in FIG. 2, and FIG. 4 is a perspective view illustrating a metal member of a battery pack according to an embodiment of the present disclosure.

Hereinafter, a battery pack 10 according to an embodiment of the present disclosure will be described in detail with reference to FIGS. 1 to 4.

The battery pack 10 according to an embodiment of the present disclosure may include a plurality of battery cells 100, a bus-bar assembly 200, and a metal member 300.

The plurality of battery cells 100 may be configured as secondary batteries, such as cylindrical secondary batteries, pouch-type secondary batteries, or prismatic secondary batteries. Hereinafter, the present embodiment will be described on the assumption that the plurality of battery cells 100 are configured as cylindrical secondary batteries. The plurality of battery cells 100 may be configured as a large number of battery cells 100 having a higher cell capacity to increase output and/or capacity for the configuration of medium and large battery packs 10. The plurality of battery cells 100 may be connected in series and parallel to each other.

The bus-bar assembly 200 may be connected to the plurality of battery cells 100. The bus-bar assembly 200 may be disposed on one side of the plurality of battery cells 100. Specifically, the bus-bar assembly 200 may be disposed on the upper side of the plurality of battery cells 100 (in the +Z-axis direction) and connected to the plurality of battery cells 100 on one side.

The bus-bar assembly 200 may include a sub-bus-bar unit 210 connected to electrodes 110 and 120 of the plurality of battery cells 100. The sub-bus-bar unit 210 may be connected in series and parallel to the electrodes 110 and 120 of the plurality of battery cells 100. As the sub-bus-bar unit 210 is connected to the electrodes 110 and 120 of the plurality of battery cells 100, the bus-bar assembly 200 may be electrically connected to the plurality of battery cells 100.

The sub-bus-bar unit 210 may include a one-way connection bus-bar 220. The one-way connection bus-bar 220 may be connected to the electrodes 110 and 120 of the battery cell 100 on one side of the sub-bus-bar unit 210 in the width direction (+Y-axis direction or -Y-axis direction). The one-way connection bus-bar 220 may be connected to the electrodes 110 and 120 of the plurality of battery cells 100.

The flow of current C formed by the plurality of battery cells 100 is roughly shown in FIG. 1 and FIG. 2. Here, the current C may be understood as the charging current of the battery pack 10.

The metal member 300 may support the plurality of battery cells 100. The metal member 300 may be disposed at the bottom of the bus-bar assembly 200. For example, the metal member 300 may be disposed under the bus-bar assembly 200 (in the -Z-axis direction). The metal member 300 may be connected to the one-way connection bus-bar 220. The metal member 300 may be electrically connected to the one-way connection bus-bar 220. For example, the upper surface 310 of the metal member 300 may be connected to the one-way connection bus-bar 220. The metal member 300 may increase the cross-sectional area of the one-way connection bus-bar 220, thereby improving the electrical stability of the one-way connection bus-bar 220.

The metal member 300 may be partially connected to the one-way connection bus-bar 220 at a predetermined position. Specifically, when viewed from a predetermined direction, the metal member 300 and the one-way connection bus-bar 220 may overlap each other, and the metal member 300 and the one-way connection bus-bar 220 may be partially connected to each other at a predetermined position in the overlapping area, instead of the entirety of the overlapping area. For example, as illustrated in FIG. 3, when viewed from the up-down direction (Z-axis direction), the metal member 300 and the one-way connection bus-bar 220 may overlap each other, and may be partially connected to each other only at some positions in the overlapping area. In addition, the predetermined position may be at least one of a plurality of positions that are closest to the respective battery cells 100 in an area where the upper surface 310 of the metal member 300 and the one-way connection bus-bar 220 overlap.

The metal member 300 may be partially connected to the one-way connection bus-bar 220 to have a predetermined conductive area at the predetermined position. Here, the conductive area may be understood as a cross-sectional area of a portion where the metal member 300 and the one-way connection bus-bar 220 are conductively connected, i.e., an electrically connected portion thereof.

The electrical resistance between the metal member 300 and the one-way connection bus-bar 220 may be inversely proportional to the conductive area. Therefore, as the conductive area of the one-way connection bus-bar 220 varies depending on the position, the electrical resistance between the metal member 300 and the one-way connection bus-bar 220 may be formed to differ between the positions.

The metal member 300 may be partially connected to the one-way connection bus-bar 220 so as to avoid current differences in the one-way connection bus-bar 220. For example, the metal member 300 may be connected to the one-way connection bus-bar 220 such that a portion of the one-way connection bus-bar 220 where relatively high current may flow is configured to have a high electrical resistance and such that a portion where relatively low current may flow is configured to have a low electrical resistance, thereby preventing current differences throughout the one-way connection bus-bar 220.

In a conventional battery pack 10, currents of different magnitudes may be formed at different positions in the one-way connection bus-bar 220 connected to the electrodes 110 and 120 of a plurality of battery cells 100. As a result, the conventional battery pack 10 has a problem in which current may be concentrated on a specific battery cell 100, and in which the lifespan of the battery pack 10 may be reduced. However, the metal member 300 of the battery pack 10 according to the present disclosure may prevent current differences from occurring in the one-way connection bus-bar 220, thereby effectively preventing current from being concentrated on a specific battery cell 100 and significantly improving the lifespan of the battery pack 10.

The metal member 300 may be connected to the one-way connection bus-bar 220 with different conductive areas depending on the distance to a serial connection portion SP of the one-way connection bus-bar 220. Specifically, the conductive area between the metal member 300 and the one-way connection bus-bar 220 at a position closer to the serial connection portion SP may be formed smaller than the conductive area between the metal member 300 and the one-way connection bus-bar 220 at a position farther from the serial connection portion SP.

The serial connection portion SP of the one-way connection bus-bar 220 will be described in detail. Positive electrodes of some battery cells 100 may be connected to one side of the one-way connection bus-bar 220, and negative electrodes of other battery cells 100 may be connected to the other side of the one-way connection bus-bar 220. In this case, the one side of the one-way connection bus-bar 220 and the other side of the one-way connection bus-bar 220 may be electrically connected to each other in series, and the portion where the two sides are electrically connected in series may be understood as a serial connection portion SP. The serial connection portion SP is a portion that is electrically connected, and does not need to be a physical part existing on the one-way connection bus-bar 220.

Meanwhile, a higher current is likely to flow in the portion of the one-way connection bus-bar 220, which is closer to the serial connection portion SP.

In the case where the metal member 300 and the one-way connection bus-bar 220 are connected as described above, the electrical resistance between the metal member 300 and the one-way connection bus-bar 220 may become larger as it is closer to the serial connection portion SP. On the other hand, the electrical resistance between the metal member 300 and the one-way connection bus-bar 220 may become smaller as it is farther from the serial connection portion SP. As a result, the electrical resistance may become larger in the portion where a higher current is likely to flow, thereby more effectively preventing the occurrence of current differences depending on the positions in the one-way connection bus-bar 220.

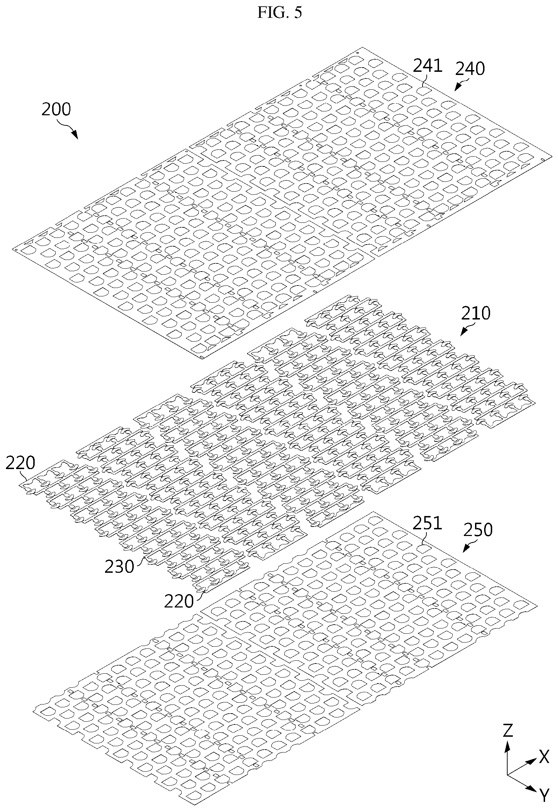

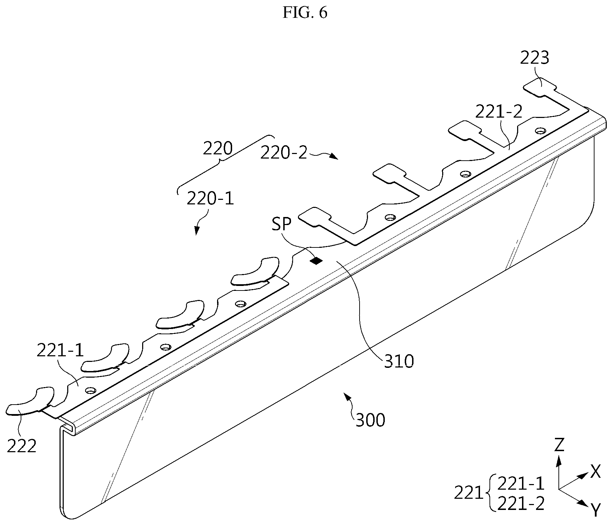

FIG. 5 is an exploded perspective view of a bus-bar assembly of a battery pack according to an embodiment of the present disclosure, and FIG. 6 is a perspective view illustrating a one-way connection bus-bar and a metal member connected to each other in a battery pack according to an embodiment of the present disclosure.

Hereinafter, the one-way connection bus-bar 220 of the battery pack 10 according to an embodiment of the present disclosure will be described in more detail with reference to FIGS. 3 to 6.

The one-way connection bus-bar 220 may include a first one-way connection bus-bar 220-1 and a second one-way connection bus-bar 220-2. The first one-way connection bus-bar 220-1 may be connected to a negative electrode of the battery cell 100. The first one-way connection bus-bar 220-1 may include a first bus-bar body 221-1 having a predetermined length. The first bus-bar body 221-1 may extend in the X-axis direction. The first one-way connection bus-bar 220-1 may include a first bus-bar body 221-1 and at least one negative-electrode connection portion 222 connected to the negative electrode of the battery cell 100.

The second one-way connection bus-bar 220-2 may be connected to a positive electrode of the battery cell 100. The second one-way connection bus-bar 220-2 may include a second bus-bar body 221-2 having a predetermined length. The second bus-bar body 221-2 may extend in the X-axis direction. The second one-way connection bus-bar 220-2 may include a second bus-bar body 221-2 and at least one positive-electrode connection portion 223 connected to the positive electrode of the battery cell 100.

The one-way connection bus-bar 220 may include a bus-bar body 221. The bus-bar body 221 may be understood to encompass the first bus-bar body 221-1 and the second bus-bar body 221-2 described above.

The serial connection portion SP may be formed between the first one-way connection bus-bar 220-1 and the second one-way connection bus-bar 220-2. In the case where the first one-way connection bus-bar 220-1 and the second one-way connection bus-bar 220-2 are disposed spaced apart from each other, the serial connection portion SP may be formed between the first one-way connection bus-bar 220-1 and the second one-way connection bus-bar 220-2 in the metal member 300.

As described above, in the case where the one-way connection bus-bar 220 includes the first one-way connection bus-bar 220-1 and the second one-way connection bus-bar 220-2, it is advantageous for common use of the one-way connection bus-bar 220 in the battery pack 10.

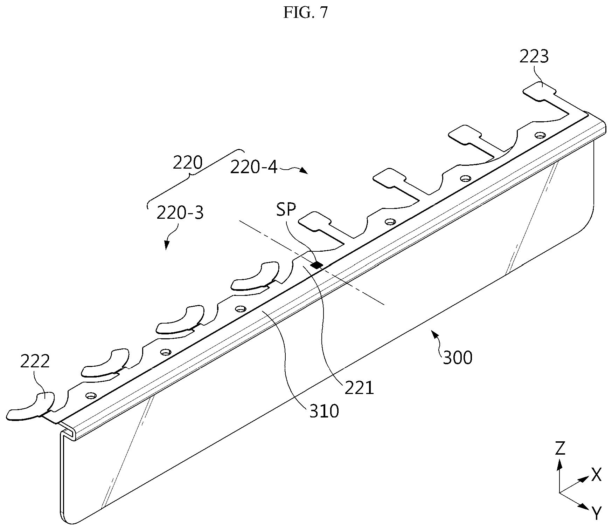

FIG. 7 is a perspective view illustrating a one-way connection bus-bar and a metal member connected to each other in a battery pack according to a modification of an embodiment of the present disclosure.

Hereinafter, the one-way connection bus-bar 220 of the battery pack 10 according to a modification of an embodiment of the present disclosure will be described in detail with reference to FIG. 7. The one-way connection bus-bar 220 of the battery pack 10 according to a modification of an embodiment of the present disclosure may include, unlike an embodiment of the present disclosure, a first one-way connection portion 220-3 and a second one-way connection portion 220-4.

The first one-way connection portion 220-3 may be connected to the negative electrode of the battery cell 100. The first one-way connection portion 220-3 may include at least one negative-electrode connection portion 222 connected to the negative electrode of the battery cell 100.

The second one-way connection portion 220-4 may be connected to the positive electrode of the battery cell 100. The second one-way connection portion 220-4 may include at least one positive-electrode connection portion 223 connected to the positive electrode of the battery cell 100.

The second one-way connection portion 220-4 may be formed integrally with the first one-way connection portion 220-3. The one-way connection bus-bar 220 may include a bus-bar body 221. In the bus-bar body 221, a portion where the negative-electrode connection portion 222 is disposed may be the first one-way connection portion 220-3, and a portion where the positive-electrode connection portion 223 is disposed may be the second one-way connection portion 220-4.

The serial connection portion SP may be formed at a position where the first one-way connection portion 220-3 and the second one-way connection portion 220-4 meet.

As described above, in the case where the one-way connection bus-bar 220 includes the first one-way connection portion 220-3 and the second one-way connection portion 220-4, the assembly of the one-way connection bus-bar 220 may be facilitated when assembling the battery pack 10.

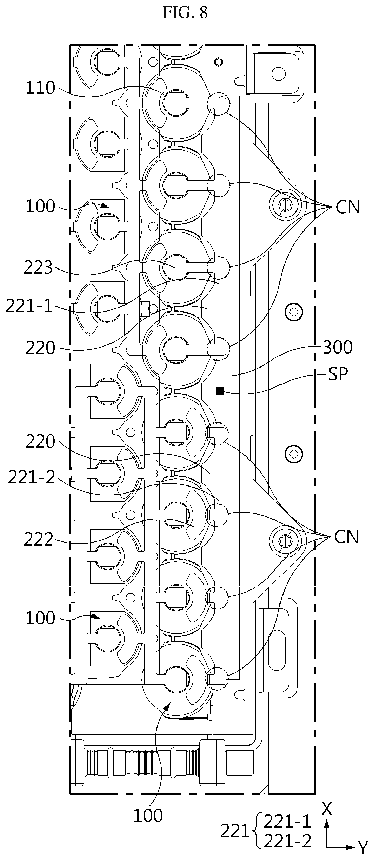

FIG. 8 is an enlarged plan view of area A in FIG. 2 indicating a coupling portion.

Hereinafter, the battery pack 10 according to an embodiment of the present disclosure will be described in more detail with reference to FIG. 6 and FIG. 8.

As described above, the one-way connection bus-bar 220 may include a bus-bar body 221 and electrode connection portions 222 and 223. In this case, the portions where the bus-bar body 221 and the electrode connection portions 222 and 223 are connected to each other may be defined as coupling portions CN. A plurality of coupling portions CN may be formed in the bus-bar body 221. The metal member 300 may be connected to the one-way connection bus-bar 220 in at least some of the plurality of coupling portions CN.

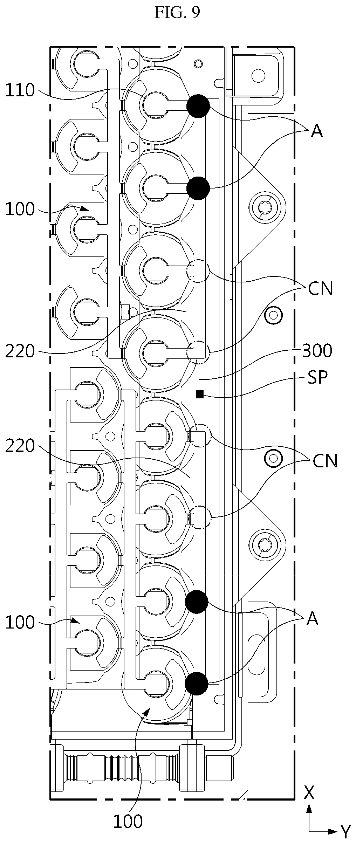

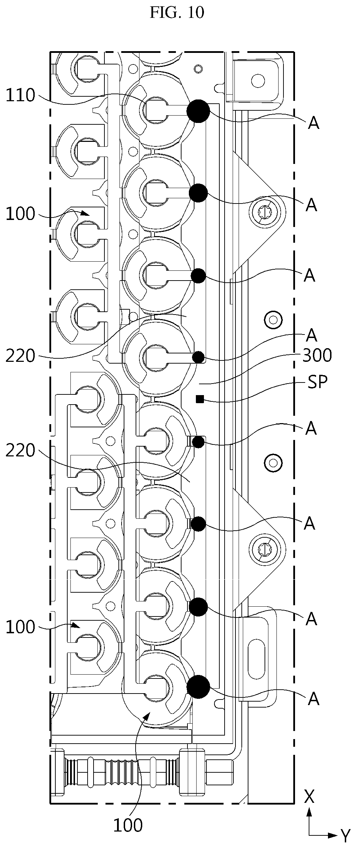

FIG. 9 is a partially enlarged plan view of a battery pack 10 according to another embodiment of the present disclosure, and FIG. 10 is a partially enlarged plan view of a battery pack 10 according to a modification of another embodiment of the present disclosure.

Hereinafter, a battery pack 10 according to another embodiment of the present disclosure will be described in detail with reference to FIGS. 8 to 10.

A metal member 300 of the battery pack 10 according to another embodiment of the present disclosure may be connected to the one-way connection bus-bar 220 by welding or conductive bonding in at least some of the plurality of coupling portions CN. Here, the coupling portion CN where welding or conductive bonding is performed may be defined as a bonding portion A.

The welding may be laser welding. The conductive bonding may be understood as bonding the metal member 300 and the one-way connection bus-bar 220 to each other by a conductive adhesive. The conductive adhesive may be, for example, an electrically conductive epoxy adhesive. In the case where the metal member 300 and the one-way connection bus-bar 220 are connected to each other by welding or conductive bonding, as described above, they may be tightly and firmly connected to each other.

The metal member 300 and the one-way connection bus-bar 220 may be connected to each other in some of the plurality of coupling portions CN, and may not be connected to each other in the remaining coupling portions CN thereof.

For example, the metal member 300 and the one-way connection bus-bar 220 may be connected to each other in a coupling portion CN that is located farther from the serial connection portion SP, among the plurality of coupling portions CN, and the metal member 300 and the one-way connection bus-bar 220 may not be connected to each other in a coupling portion CN that is located closer to the serial connection portion SP, among the plurality of coupling portions CN.

For example, as illustrated in FIG. 9, in the case where four coupling portions CN are formed to the side in the +X-axis direction and to the side in the -X-axis direction, respectively, based on the serial connection portion SP, the metal member 300 and the one-way connection bus-bar 220 may not be connected to each other in two coupling portions CN formed to the side in the +X-axis direction and two coupling portions CN formed to the side in the -X-axis direction, which are closer to the serial connection portion SP. In addition, bonding portions A may be formed in two coupling portions CN formed to the side in the +X-axis direction and two coupling portions CN formed to the side in the -X-axis direction, which are farther from the serial connection portion SP, so that the metal member 300 and the one-way connection bus-bar 220 may be connected to each other therein. However, FIG. 9 shows merely an example, and the connection structure of the metal member 300 and the one-way connection bus-bar 220 is not limited thereto.

As described above, in the case where the metal member 300 and the one-way connection bus-bar 220 are connected to each other in some of the plurality of coupling portions CN and are not connected to each other in the remaining coupling portions CN thereof, there is an advantage in which the current differences of the one-way connection bus-bar 220 may be improved by a simple method.

The metal member 300 and the one-way connection bus-bar 220 may be bonded and connected to each other in every coupling portion CN. In addition, the bonding area between the metal member 300 and the one-way connection bus-bar 220 may differ between the plurality of coupling portions CN. That is, the bonding portions A may be formed in every coupling portion CN, but the area of the bonding portion A may be formed differently between the bonding portions A.

For example, the bonding area between the metal member 300 and the one-way connection bus-bar 220 may be configured to be larger in a coupling portion CN located farther from the serial connection portion SP, among the plurality of coupling portions CN, and the bonding area between the metal member 300 and the one-way connection bus-bar 220 may be configured to be smaller in a coupling portion CN located closer to the serial connection portion SP, among the plurality of coupling portions CN.

For example, as illustrated in FIG. 10, in the case where four coupling portions CN are formed to the side in the +X-axis direction and to the side in the -X-axis direction, respectively, based on the serial connection portion SP, the bonding area between the metal member 300 and the one-way connection bus-bar 220 may be configured larger as it gets farther from the serial connection portion SP. In this case, the electrical resistance of the one-way connection bus-bar 220 may decrease as it gets farther from the serial connection portion SP.

As described above, in the case where the metal member 300 and the one-way connection bus-bar 220 are bonded and connected to each other in every coupling portion CN and where the bonding area is configured to differ between the plurality of coupling portions CN, the conductive area of the one-way connection bus-bar 220 may be more precisely controlled for each position, so that the current differences of the one-way connection bus-bar 220 may be improved more effectively.

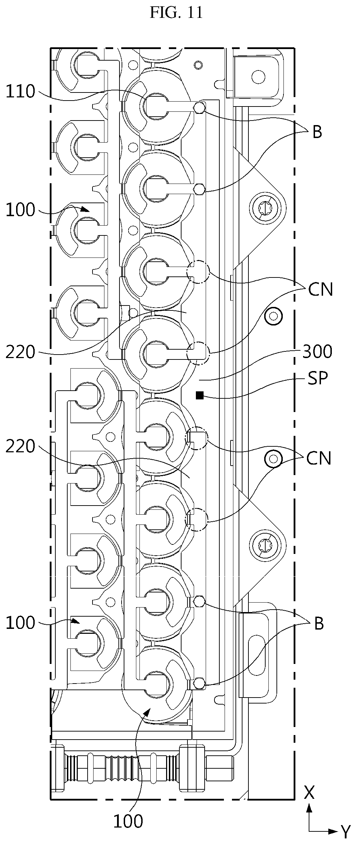

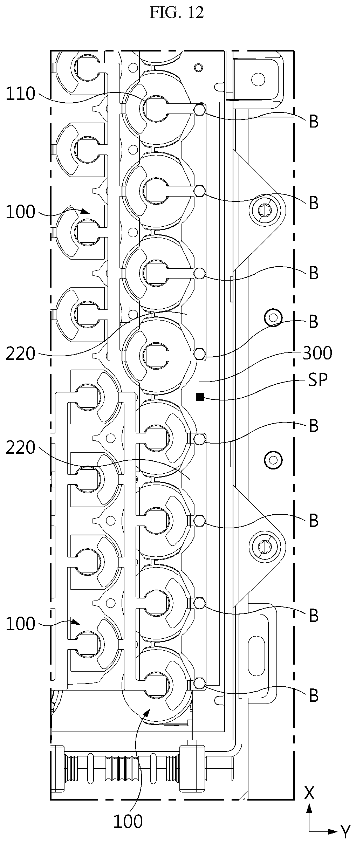

FIG. 11 is a partially enlarged plan view of a battery pack according to another embodiment of the present disclosure, and FIG. 12 is a partially enlarged plan view of a battery pack according to a modification of another embodiment of the present disclosure.

Hereinafter, a battery pack 10 according to another embodiment of the present disclosure will be described in detail with reference to FIGS. 8, 11, and 12.

According to another embodiment of the present disclosure, the metal member 300 of the battery pack 10 may be connected to the one-way connection bus-bar 220 by bolting in at least some of the plurality of coupling portions CN.

The bolting may be performed by fastening a bolt member B. The bolt member B may be fastened to the metal member 300 by passing through the one-way connection bus-bar 220. The bolt member B may be fastened with a predetermined bolting strength. The metal member 300 and the one-way connection bus-bar 220 may come into contact with each other by the bolt member B. The contact area between the metal member 300 and the one-way connection bus-bar 220 may be proportional to the bolting strength of the bolt member B. As described above, when the metal member 300 and the one-way connection bus-bar 220 are connected by bolting, they may be tightly and firmly connected to each other.

The metal member 300 and the one-way connection bus-bar 220 may be connected to each other in some of the plurality of coupling portions CN, and may not be connected to each other in the remaining coupling portions CN thereof.

For example, the metal member 300 and the one-way connection bus-bar 220 may be connected to each other in a coupling portion CN located farther from the serial connection portion SP, among the plurality of coupling portions CN, and the metal member 300 and the one-way connection bus-bar 220 may not be connected to each other in a coupling portion CN located closer to the serial connection portion SP, among the plurality of coupling portions CN.

For example, as illustrated in FIG. 11, in the case where four coupling portions CN are formed to the side in the +X-axis direction and to the side in the -X-axis direction, respectively, based on the serial connection portion SP, the metal member 300 and the one-way connection bus-bar 220 may not be connected to each other in two coupling portions CN formed to the side in the +X-axis direction and two coupling portions CN formed to the side in the -X-axis direction, which are closer to the serial connection portion SP. In addition, the metal member 300 and the one-way connection bus-bar 220 may be connected to each other in two coupling portions CN formed to the side in the +X-axis direction and two coupling portions CN formed to the side in the -X-axis direction, which are farther from the serial connection portion SP. However, FIG. 11 shows merely an example, and the connection structure of the metal member 300 and the one-way connection bus-bar 220 is not limited thereto.

As described above, in the case where the metal member 300 and the one-way connection bus-bar 220 are connected to each other in some of the plurality of coupling portions CN and are not connected to each other in the remaining coupling portions CN thereof, there is an advantage in which the current differences of the one-way connection bus-bar 220 may be improved by a simple method.

The metal member 300 and the one-way connection bus-bar 220 may be connected to each other by bolting in every coupling portion CN. In addition, the bolting strength of the bolt member B for bolting the metal member 300 and the one-way connection bus-bar 220 to each other may be configured to differ between the plurality of coupling portions CN.

For example, the bolting strength may be configured to be higher in the coupling portion CN located farther from the serial connection portion SP, among the plurality of coupling portions CN, so that the contact area between the metal member 300 and the one-way connection bus-bar 220 may become larger. In addition, the bolting strength may be configured to be lower in the coupling portion CN located closer to the serial connection portion SP, among the plurality of coupling portions CN, so that the contact area between the metal member 300 and the one-way connection bus-bar 220 may become smaller.

For example, as illustrated in FIG. 12, in the case where four coupling portions CN are formed to the side in the +X-axis direction and to the side in the -X-axis direction, respectively, based on the serial connection portion SP, bolting may be performed in every coupling portion CN so that the bolting strength becomes higher as it is located farther from the serial connection portion SP. In this case, the electrical resistance of the one-way connection bus-bar 220 may decrease as it gets farther from the serial connection portion SP.

As described above, in the case where the metal member 300 and the one-way connection bus-bar 220 are connected by bolting to each other in every coupling portion CN, and where the bolting strength is formed differently between the plurality of coupling portions CN, the conductive area may be more precisely and easily adjusted depending on the position of the one-way connection bus-bar 220, thereby effectively improving the current differences of the one-way connection bus-bar 220.

Hereinafter, referring back to FIGS. 3 and 4, the one-way connection bus-bar 220, the metal member 300, and the side frame of the battery pack 10 according to the present disclosure will be described in more detail.

The one-way connection bus-bar 220 may be formed such that at least a portion thereof extends to have a predetermined length. The metal member 300 may be formed to extend to have a predetermined length in the longitudinal direction of the one-way connection bus-bar 220. The one-way connection bus-bar 220 and the metal member 300 may overlap each other in at least a portion along the longitudinal direction. The one-way connection bus-bar 220 and the metal member 300 may be electrically and physically connected to each other so as to have a predetermined conductive area at a predetermined position in the overlapping areas. For example, as illustrated in FIG. 3, the one-way connection bus-bar 220 and the metal member 300 may extend in the X direction, respectively. When viewed from the top-down direction (Z-axis direction), the one-way connection bus-bar 220 and the metal member 300 may overlap each other at least in a part, and the one-way connection bus-bar 220 and the metal member 300 may be connected to each other so as to have a predetermined conductive area at a specific position in the area where they overlap each other along the X-axis direction.

The metal member 300 may include a top surface 310 and an insertion portion 320. The top surface 310 may face the sub-bus-bar unit 210 so as to overlap the sub-bus-bar unit 210 at least in a part. The top surface 310 may face the bottom of the sub-bus-bar unit 210. A concave portion 311 and a convex portion 312 may be formed on the top surface 310. A battery cell 100 may be stored in the concave portion 311. The convex portion 312 may be formed between the concave portions 311. The convex portion 312 may be positioned between the battery cells 100. The insertion portion 320 may be inserted into and fixed to a side frame, which will be described later. The top surface 310 may have a predetermined length and width. For example, the top surface 310 may extend in the X-axis direction and have a width in the Y-axis direction. The insertion portion 320 may have a predetermined length and width. For example, the insertion portion 320 may extend in the X-axis direction and have a width in the Z-axis direction. The cross-section of the top surface 310 and the cross-section of the insertion portion 320 may be formed perpendicular to each other.

The battery pack 10 according to the present disclosure may include a side frame 410 and 420. The side frame 410 and 420 may support a plurality of battery cells 100 at the bottom of the bus-bar assembly 200 (in the -Z-axis direction). The side frame 410 and 420 may support the bus-bar assembly 200 and other components constituting the battery pack 10, in addition to the plurality of battery cells 100.

The side frame 410 and 420 may include a side wall 410 and a side structure 420. A pair of side walls 410 may be configured on the outermost both sides of the side frame 410 and 420. The side walls 410 may store and support a plurality of battery cells 100 in at least one row. The side wall 410 may have a predetermined length. For example, the side wall 410 may extend in the X direction.

The side structure 420 may support the plurality of battery cells 100. At least one side structure 420 may be configured on the inner side of the pair of side walls 410. The side structure 420 may store and support the plurality of battery cells 100 in two rows. The side structure 420 may have a predetermined length. For example, the side structure 420 may extend in the X direction.

The metal member 300 may be disposed on the side wall 410. The metal member 300 may be inserted into the side wall 410 and fixed thereto. Specifically, the insertion portion 320 of the metal member 300 may be inserted into the side wall 410 in the Z-axis direction and fixed thereto. As the metal member 300 is disposed on the side wall 410, the rigidity of the side wall 410 may be reinforced.

Hereinafter, referring back to FIGS. 3 to 5, the bus-bar assembly 200 of the battery pack 10 according to the present disclosure will be described in more detail.

The bus-bar assembly 200 according to an embodiment of the present disclosure may include a sub-bus-bar unit 210 that includes a two-way connection bus-bar 230. The two-way connection bus-bar 230 may be connected to the electrodes 110 and 120 of the battery cell 100 on both sides of the sub-bus-bar unit 210 in the width direction (+Y-axis direction and -Y-axis direction). The one-way connection bus-bar 220 may be disposed on the outermost both sides of the sub-bus-bar unit 210 (in the -Y-axis direction and +Y-axis direction), and the two-way connection bus-bar 230 may be disposed between the one-way connection bus-bars 220.

The bus-bar assembly 200 may include bus-bar covers 240 and 250. The bus-bar covers 240 and 250 may be provided to cover the top of a plurality of battery cells 100 (in the +Z direction). The bus-bar covers 240 and 250 may be configured as an insulating material.

The bus-bar covers 240 and 250 may be configured to be coupled to each other with the sub-bus-bar unit 210 interposed therebetween. Specifically, the bus-bar covers 240 and 250 may include a first bus-bar cover 240 and a second bus-bar cover 250. Guide openings 241 and 251 may be formed on the bus-bar covers 240 and 250. The electrodes of the battery cell 100 may be exposed through the guide openings 241 and 251. The guide openings 241 and 251 may include a first guide opening 241 formed in the first bus-bar cover 240 and a second guide opening 252 formed in the second bus-bar cover 250.

Hereinafter, referring back to FIG. 1, a pack case 500 of a battery pack 10 according to the present disclosure will be described in detail. The battery pack 10 according to the present disclosure may include a pack case 500. The pack case 500 may store a plurality of battery cells 100. The pack case 500 may include configurations such as a side wall, a bottom plate, and a pack lid.

Meanwhile, although not shown, the battery pack 10 according to the present disclosure may further include various devices for controlling charging and discharging of the battery cells 100, such as a BMS (Battery Management System), a current sensor, and a fuse.

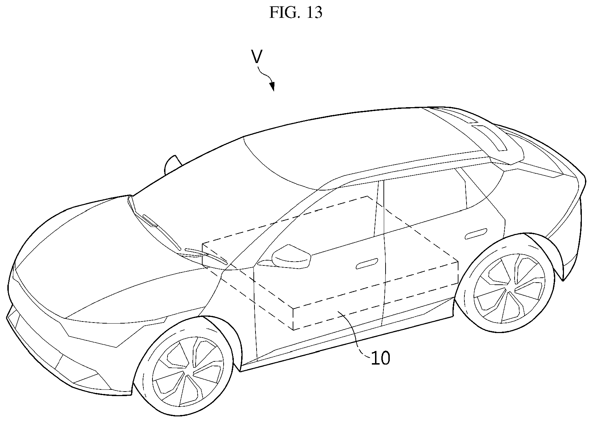

FIG. 13 is a drawing illustrating a vehicle according to an embodiment of the present disclosure.

Hereinafter, referring to FIG. 13, a battery pack 10 according to the present disclosure may be applied to a vehicle V such as an electric vehicle or a hybrid vehicle. That is, the vehicle V according to the present disclosure may include the battery pack 10 according to the present disclosure. The battery pack 10 may be installed in the body frame under the vehicle seat or the trunk space. In addition, the vehicle V according to an embodiment of the present disclosure may further include various other components included in the vehicle, in addition to the battery pack 10. For example, the vehicle V according to an embodiment of the present disclosure may further include a car body, a motor, and a control device such as an ECU (electronic control unit), in addition to the battery pack 10 according to an embodiment of the present disclosure.

In addition, the battery pack 10 according to an embodiment of the present disclosure may also be applied to other devices, equipment, and facilities such as an energy storage system using secondary batteries, in addition to the vehicle V.

Although terms indicating directions such as up, down, left, right, front, and back are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

10: Battery pack
100: Battery cell
110: Positive electrode
120: Negative electrode
200: Bus-bar assembly
210: Sub-bus-bar unit
220: One-way connection bus-bar
221: Bus-bar body
221-1: First bus-bar body
221-2: Second bus-bar body
222: Negative-electrode connection portion
223: Positive-electrode connection portion
220-1: First one-way connection bus-bar
220-2: Second one-way connection bus-bar
220-3: First one-way connection portion
220-4: Second one-way connection portion
230: Two-way connection bus-bar
240: First bus-bar cover
241: First guide opening
250: Second bus-bar cover
251: Second guide opening
300: Metal member
310: Top surface
311: Concave part
312: Convex part
320: Insertion part
410: Side wall
420: Side structure
500: Pack case
C: Current
SP: Serial connection portion
CN: Coupling portion
A: Bonding portion
B: Bolt member
V: Vehicle

## Claims

1. A battery pack comprising:
a plurality of battery cells;
a bus-bar assembly disposed on one side of the plurality of battery cells and comprising a sub-bus-bar unit connected to electrodes of the plurality of battery cells; and
a metal member configured to support the plurality of battery cells at a bottom of the bus-bar assembly,
wherein the sub-bus-bar unit
comprises a one-way connection bus-bar connected to the electrodes of the battery cells on one side of the sub-bus-bar unit in a width direction, and
wherein the metal member
is partially connected to the one-way connection bus-bar at a predetermined position to have a predetermined conductive area so as to avoid current differences in the one-way connection bus-bar.

2. The battery pack according to claim 1,
wherein the metal member
is connected to the one-way connection bus-bar such that a conductive area at a position closer to a serial connection portion of the one-way connection bus-bar is configured to be smaller than a conductive area at a position farther from the serial connection portion.

3. The battery pack according to claim 2,
wherein the one-way connection bus-bar comprises:
a first one-way connection bus-bar connected to a negative electrode of the battery cell; and
a second one-way connection bus-bar connected to a positive electrode of the battery cell, and
wherein the serial connection portion is formed between the first one-way connection bus-bar and the second one-way connection bus-bar.

4. The battery pack according to claim 2,
wherein the one-way connection bus-bar comprises:
a first one-way connection portion connected to a negative electrode of the battery cell; and
a second one-way connection portion connected to a positive electrode of the battery cell and formed integrally with the first one-way connection portion, and
wherein the serial connection portion
is formed at a position where the first one-way connection portion and the second one-way connection portion meet each other.

5. The battery pack according to claim 1,
wherein the one-way connection bus-bar comprises:
a bus-bar body extending in one direction; and
a plurality of electrode connection portions extending from the bus-bar body to the electrodes of the battery cells, and
wherein the metal member
is connected to the one-way connection bus-bar by welding or conductive bonding in at least some of a plurality of coupling portions where the bus-bar body and the electrode connection portion are connected.

6. The battery pack according to claim 5,
wherein the metal member and the one-way connection bus-bar are connected to each other in some of the plurality of coupling portions and
are not connected to each other in the remaining coupling portions thereof.

7. The battery pack according to claim 5,
wherein the metal member and the one-way connection bus-bar are bonded and connected to each other in every coupling portion, and
a bonding area between the metal member and the one-way connection bus-bar is configured to differ between the plurality of coupling portions.

8. The battery pack according to claim 1,
wherein the one-way connection bus-bar comprises:
a bus-bar body extending in one direction; and
a plurality of electrode connection portions extending from the bus-bar body to the electrodes of the battery cells, and
wherein the metal member
is connected to the one-way connection bus-bar by bolting in at least some of a plurality of coupling portions where the bus-bar body and the electrode connection portion are connected.

9. The battery pack according to claim 8,
wherein the metal member and the one-way connection bus-bar
are connected to each other in some of the plurality of coupling portions, and
are not connected to each other in the remaining coupling portions thereof.

10. The battery pack according to claim 8,
wherein the metal member and the one-way connection bus-bar
are connected by bolting in every coupling portion, and
wherein bolting strength thereof is configured to differ between the plurality of coupling portions.

11. A vehicle comprising at least one battery pack according to any one of claims 1 to 10.
